Europäisches Patentamt

European Patent Office

Office européen des brevets

(11) Veröffentlichungsnummer: **0 036 083**
**B1**

(12) **EUROPÄISCHE PATENTSCHRIFT**

(45) Veröffentlichungstag der Patentschrift:
28.09.83

(21) Anmeldenummer: 81101070.1

(22) Anmeldetag: 16.02.81

(51) Int. Cl.³: **G 11 B 5/58, G 11 B 21/10**

(54) Einrichtung zur Steuerung und Einhaltung der Spurlage von Magnetköpfen sowie Verfahren und Anordnung zur Kompensation gleichförmiger Störgrössen in solchen Einrichtungen.

(30) Priorität: 13.03.80 DE 3009548

(43) Veröffentlichungstag der Anmeldung:
23.09.81 Patentblatt 81/38

(45) Bekanntmachung des Hinweises auf die Patenterteilung:
28.09.83 Patentblatt 83/39

(84) Benannte Vertragsstaaten:
DE FR GB

(56) Entgegenhaltungen:
DE-A-1 812 789
DE-A-2 554 083
DE-B-1 120 731
FR-A-2 408 899
US-A-3 840 893
IBM TECHNICAL DISCLOSURE BULLETIN, Band 22, Nr. 8A , Januar 1980, Seiten 3269-3270 New York, U.S.A. A. MATLA et al.: »Track servo system compensating pattern defects«
IBM TECHNICAL DISCLOSURE BULLETIN, Band 20, Nr. 1, Juni 1977, Seiten 349—350 New York, U.S.A. R. S. PALMER: »Off-track gain calibration of position error signal«

(73) Patentinhaber: International Business Machines Corporation, Old Orchard Road, Armonk, N.Y. 10504 (US)

(72) Erfinder: Matla, Arno, Bussardweg 20,
D-7035 Waldenbuch (DE)
Erfinder: Zimmermann, Volker, Benater Strasse 51,
D-7032 Sindelfingen (DE)

(74) Vertreter: Gaugel, Heinz, Dipl.-Ing. et al, Schönaicher Strasse 220, D-7030 Böblingen (DE)

IBM TECHNICAL DISCLOSURE BULLETIN, Band 16, Nr. 4, September 1973, Seiten 1338—1340 New York, U.S.A. N. B. TAYLOR: »Magnetic head position sensing«
IBM TECHNICAL DISCLOSURE BULLETIN, Band 21, Nr. 2, Juli 1978, Seiten 804—805 W. A. HERRINGTON et al.: »Quadburst pes system for disk file servo«

Einrichtung zur Steuerung und Einhaltung der Spurlage von Magnetköpfen sowie Verfahren und Anordnung zur Kompensation gleichförmiger Störgrößen in solchen Einrichtungen

Die Erfindung betrifft eine Einrichtung zur Steuerung und Einhaltung der Spurlage von Magnetköpfen gemäß dem Oberbegriff des Anspruchs 1 sowie ein Verfahren zur Kompensation von gleichförmigen Störgrößen, in solchen Einrichtungen.

Bei magnetischen Aufzeichnungsträgern, die gegenüber den Magnetköpfen eine Relativbewegung ausführen, wie dies bei Plattenspeichern der Fall, sind Einrichtungen zur Spurnachlaufsteuerung, die der Steuerung und Einhaltung der Spurlage von Magnetköpfen dienen, bekannt. Dabei sind auf einem magnetischen Aufzeichnungsträger beidseitig der Mitte von Aufzeichnungsspuren jeweils versetzt Servopositionssignale aufgezeichnet, die breiter sind als es die Breite der Spur entspricht. Diese Servopositionssignale sind vorcodierte Informationssignale, die in sogenannten Servo-Sektoren liegen können, d. h., das sind einzelne Abschnitte in einer runden Datenspur, die nur Servozwecken dienen und von längeren Datensektoren abwechselnd innerhalb einer Spur unterbrochen werden. Es können die Servopositionssignale jedoch auch auf gesonderten Servospuren oder auf einer gesonderten Seite einer Platte eines Plattenstapels aufgezeichnet sein. Die beidseitig der Spuren liegenden Servopositionssignale werden von den Magnetköpfen gelesen und detektiert. Ein Positionsfehlersignal, das Auskunft über die Abweichung des Magnetkopfes von der Spurmitte gibt, wird dadurch festgestellt, daß man die Differenz der beiden Servopositionssignale, die rechts und links der Spurmitte liegen, festgestellt. Beträgt diese Differenz Null, dann wird angenommen, daß der Kopf genau über der Spur liegt. Eine Einrichtung zur Spurnachlaufsteuerung, wie sie vorstehend genannt ist, ist beispielsweise aus der DE-AS-1 424 516 bekannt.

Das im Magnetkopf induzierte Signal ist exponentiell umgekehrt proportional zum Abstand zwischen der magnetischen Oberfläche des Aufzeichnungsträgers und dem Kopfspalt. Dies führt bei unterschiedlichem Abstand des Kopfspaltes gegenüber dem Aufzeichnungsträger dazu, daß die Servopositionssignale unterschiedlich große Signale im Magnetkopf induzieren, auch dann, wenn der Magnetkopf genau über der Spurmitte angeordnet ist. Aufgrund dieser Verkippung, die insbesondere bei Plattenspeichern mit flexiblen Magnetplatten auftreten können, weil die Struktur des Substrats, die Rauhigkeit der Oberfläche, die Kopfform und die Aufhängung des Magnetkopfes es nicht immer gewährleisten, daß der Kopf über die gesamte Spurbreite parallel zur Plattenoberfläche fliegt, wird ein Positionsfehlersignal erzeugt das fälschlicherweise von Null abweicht und dadurch eine Verstellung des Magnetkopfes durch den nachgestalteten Regelkreis und die Zustellmechanik verursacht. Dadurch wird der Kopf verschoben, ohne daß dies nötig oder gerechtfertigt ist. Eine Verkippung des Magnetkopfes täuscht somit eine radiale Positionsabweichung vor, auf die der Regelkreis mit einer Abweichung von der Spurmitte reagiert.

Aufgabe vorliegender Erfindung ist es daher, ausgehend von der Einrichtung gemäß dem Oberbegriff des Anspruchs 1, diese so auszugestalten, daß auch Abweichungen von der gleichmäßigen Höhe zwischen Magnetkopf und Spur bzw. Servosignalen nicht zu einer falschen Reaktion führen oder anders gesagt, daß Magnetkopfverkippungen bzw. schiefe Aufzeichnungsträger erkannt und so korrigiert werden, daß der Kopf in gewünschter Weise der Spur folgt.

Die Lösung dieser Aufgabe erfolgt erfindungsgemäß durch die Anwendung der im kennzeichnenden Teil des Anspruchs 1 genannten Merkmale.

In vorteilhafter Weise wird durch das Vorsehen der erfindungsgemäß gestalteten Codierung der Servopositionssignalaufzeichnungen und die Art der Auswertung der Hilfs-Servopositionsabtastsignale in einfacher Weise ein Mittel angegeben, um die obengenannten Probleme zu lösen. Darüber hinaus können diese Hilfs-Positionsabtastsignale in vorteilhafter Weise zusätzlich zur Normierung des Positionsfehlersignals, das den Regler steuert, zur Synchronisation und zur Verbesserung des Signal-Rauschverhaltens, z. B. bei Aufschalten auf die normalen oder Haupt-Servopositionsabtastsignale, verwendet werden.

Vorteilhafte Ausgestaltungen und Weiterbildungen der im Anspruch 1 niedergelegten grundsätzlichen Lösung sind in den zugehörigen Unteransprüchen 2 bis 5 niedergelegt. Die damit verbundenen Vorteile liegen entweder unmittelbar auf der Hand bzw. ergeben sich aus dem jeweiligen Unteranspruch oder sie sind an entsprechenden Stellen der Beschreibung des Ausführungsbeispieles entsprechend erläutert.

Ein weiteres Problem, welches in Spurfolgeregelkreisen auftritt, sind die sogenannten gleichförmigen Fehler oder Störgrößen. Im Idealfall halten diese Regelkreise die Mitte des Magnetkopfes genau über der Spurmitte. In Wirklichkeit bewegt sich jedoch die Kopfmitte nicht exakt auf der Spurmitte. Eine Ursache dafür ist das Rauschen und damit eine Ungenauigkeit, die mit der Positionsmessung verbunden ist. Eine andere wesentliche Ursache für Fehler liegt in den Störgrößen, die hinter dem Regler in den Regelkreis eingreifen. Beispiele für derartige Störgrößen sind aerodynamische Kräfte, die auf den Magnetkopf einwirken und diesen seitlich zur Spur versetzen sowie Offsetspannungen in Leistungsverstärkern. Derartige Erscheinungen rufen ohne besondere Gegenmaßnahmen im Regelkreis stationäre Folgefehler bzw. gleichförmige Fehler hervor.

Es ist an sich allgemein bekannt, wie ein Beispiel aus der DE-AS 1 812 789 zeigt, solche gleichförmigen Störgrößen mit Hilfe von Reglern, welche einen integralen Anteil haben, zu eliminieren. Durch den integralen Anteil wird jedoch die Dynamik des Regelkreises stark beeinträchtigt und Einschwingvorgänge verlängern sich. Aus diesen Gründen sind solche Regler bei Spurnachlaufsteuerung von Magnetköpfen, die sehr rasch reagieren müssen, völlig ungeeignet.

Bei Regelsystemen von Spurnachlaufsteuerungen ist es bekannt, wie beispielsweise die DE-OS 2 215 045 zeigt, daß das Regelsystem verzögertes Verhalten zeigt, welches auszugleichen ist. Für diesen Ausgleich ist es dort beschrieben, ein Zusatzsignal, welches der Abweichungsgeschwindigkeit proportional ist, zu erzeugen und in der Phasenlage sowie der Amplitude kompensiert dem Abweichungssignal hinzuaddieren. Dieses Summensignal wird über einen weiteren Kompensator dem Stellenglied als Regelsignal zugeführt. Für den Ausgleich von gleichförmigen Störgrößen ist eine derartige Regelung nicht geeignet, da diese Regelung nicht oder in nicht korrekter Weise auf diese Art von Störgrößen anspricht.

Bei periodisch wiederauftretenden Fehlern innerhalb von Spurnachlaufsteuerungen wird bei einem aus der DE-OS 25 14 103 bekannten Verfahren zu deren Ausgleich so verfahren, daß die periodisch auftretenden Fehler zunächst ermittelt werden, dann gespeichert und anschließend positionsgerecht dem Positionsfehlersignal hinzugefügt werden.

Einen Hinweis auf die Lösung des Problems mit gleichförmigen Störgrößen und deren Eliminierung ist diesem Verfahren zur Beseitigung periodischer Fehler nicht zu entnehmen.

Im Hinblick auf dieses vorstehend genannte Problem der gleichförmigen Fehler bzw. Störgrößen besteht die Aufgabe einer Weiterbildung der Erfindung weiterhin darin, diese Störgrößen, einfach, zuverlässig und ohne sonstige Beeinflussung der Charakteristik des Regelkreises zu kompensieren. Diese Weiterbildung erfolgt durch die Anwendung der im Anspruch 6 genannten Verfahrensmerkmale und der im Anspruch 7 angegebenen Anordnung zur Durchführung des besagten Verfahrens.

Mit dieser Lösung ist der wesentliche Vorteil verbunden, daß gleichförmige Störgrößen im Regelkreis einfach kompensiert werden, ohne daß die Dynamik des Regelkreises nachteilig beeinträchtigt wird und daß somit bei Anwendung in Spurnachlaufsteuerungen für Magnetköpfe diese auf der Spurmitte gehalten werden.

Die Erfindung und ihre verschiedenen Aspekte ist nachfolgend anhand von in den Figuren dargestellten Ausführungsbeispielen näher erläutert. Die Figuren zeigen im einzelnen:

Fig. 1 schematisch und vergrößert die Ansicht eines verkippten Magnetkopfes, der über einem Teil einer Magnetplatte angeordnet ist;

Fig. 2 schematisch und vergrößert die erfindungsgemäß gestaltete Codierung der Servopositionssignalaufzeichnung in Draufsicht auf einen Spurausschnitt eines Magnetplattenausschnittes;

Fig. 3 schematisch die Art der Aufbringung der erfindungsgemäßen Codierung, d. h. deren Initialisierung;

Fig. 4 schematisch ein Blockschaltbild zur Auswertung der erfindungsgemäß gestalteten Codierung und zur Ermittlung des erfindungsgemäßen Positionsfehlersignals und

Fig. 5 schematisch ein Blockschaltbild eines Reglers für die Spurnachlaufsteuerung, der die Korrektur von gleichförmigen Störgrößen ermöglicht.

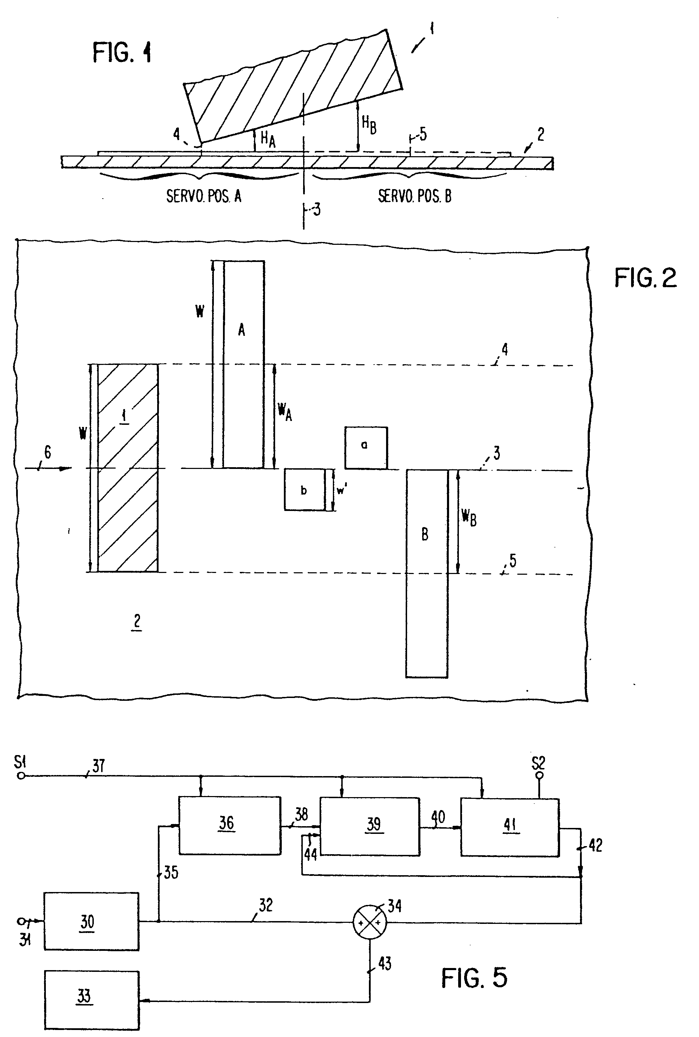

In Fig. 1 ist ein Magnetkopf 1 in seiner Position oberhalb einer Magnetplatte 2, jeweils in Ausschnitten dargestellt, aufgezeigt. Der Magnetkopf 1 ist dabei gegenüber der Oberfläche der Magnetplatte verkippt, so daß die eine Seite des Kopfes näher an der Platte ist als die andere Seite. Dies ist durch die verschieden langen Pfeile $H_A$ und $H_B$ dargestellt. Mit $H_A$ ist die Feldstärke des Streuflusses bezeichnet, der von dem Servopositionssignal A, welches sich links der mit 3 bezeichneten Spurmitte befindet, ausgeht. Entsprechend stellt $H_B$ die Feldstärke des Streuflusses dar, der von dem Servopositionssignal B, das sich auf der rechten Seite der Spurmitte 3 befindet, ausgeht. Die eigentliche Aufzeichnungsspur befindet sich zwischen den Grenzlinien 4 und 5. Dies läßt sich aus Fig. 2 besser erkennen. Die Darstellung in Fig. 1 zeigt das der Erfindung zugrundeliegende Problem auf, daß nämlich bei verkipptem Magnetkopf und dessen genauer Lage über der Spurmitte 3, wie dies in der Figur dargestellt ist, eine unterschiedlich große Feldstärke durch die Servopositionssignale A und B im Kopf induziert wird. Dadurch wird eine nicht vorhandene Verschiebung von der Spurmitte vorgetäuscht. Dies führt dann durch den Regelkreis normalerweise dazu, daß der Kopf entsprechend dem Positionsfehlersignal, das aus der Differenz der Servopositionssignale A und B gewonnen wird, aus der Spurmitte 3 heraus verschoben wird.

In Fig. 2 ist in Draufsicht auf einen Ausschnitt eine Magnetplatte 2 schematisch die Codierung dargestellt, die zur Erkennung und Eliminierung der in Fig. 1 geschilderten Magnetkopfverkippung dient. Der Magnetkopf 1 steht dabei über der Spurmitte 3 und genau zwischen den Spurgrenzen 4 und 5. Er bewegt sich relativ zur Magnetplatte 2 in Flugrichtung 6, die durch den entsprechenden Pfeil dargestellt ist. In Flugrichtung 6 gesehen, links von der Spurmitte 3, ist das Servopositionssignal A in einer Breite W codiert, die beispielsweise der Spurbreite entspricht. Die Codierung A beginnt dabei genau an der linken Grenze der Spurmitte 3. Etwas entfernt in Flugrichtung 6 gesehen, ist das zweite Servopositionssignal B auf der rechten Seite der Spurmitte 3, ebenfalls vorzugsweise in einer Breite W aufgezeichnet, die der Spurbreite entspricht. Zwischen diesen beiden Haupt-Servopositionssignalen A und B sind Hilfs-Positionssignale a und b versetzt rechts und links der Spurmitte 3 angebracht. Diese Hilfs-Servopositionssignale a und b weisen eine gegenüber den Haupt-Servopositionssignalen A und B kleinerer Breite w' auf, die maximal etwa der Breite $W_A$ bzw. $W_B$ entspricht, welche der Magnetkopf 1 beim Überfliegen der Spurmitte 3 von den Haupt-Servopositionssignalen A und B überstreicht.

Unter den Bezeichnungen A, B bzw. a, b sind elektrische Werte mit Amplitude und Polarität der Servopositionssignale zu verstehen. Mit den Bezeichnungen W, w', $W_A$ und $W_B$ sind die physikalischen Breiten der den Signalen zugehörigen Magnetisierungen auf der Spur der Magnetplatte 2 bzw. den Teilen davon, die der Magnetkopf 1 überstreicht, gemeint.

Die zusätzlichen Hilfs-Servopositionssignale a und b sind symmetrisch zur Spurmitte 3 und gemäß dem dargestellten Beispiel derart zwischen den beiden Haupt-Servopositionssignalen A und B angeordnet, daß anschließend an das Haupt-Servopositionssignal A, gesehen in Flugrichtung 6, auf der anderen Seite der Spurmitte 3 das Hilfs-Servopositionssignal b vorhanden ist und dann anschließend in einem gewissen Abstand auf der anderen Seite der Spurmitte 3 das andere Hilfs-Servopositionssignal a angeordnet ist. Dann kommt wiederum auf der anderen Seite der Spurmitte 3 das zweite Haupt-Servopositionssignal B. Die Wirkung der beiden zusätzlichen Hilfs-Servopositionssignale a und b ist die, daß beim Überstreichen des Magnetkopfes auf der Mitte der Spur und einem nicht verkippten Zustand, ihre beiden Signalanteile völlig gleich sind. Ist jedoch der Magnetkopf 1, wie in Fig. 1 dargestellt, gegenüber der Magnetplatte 2 verkippt, so ergibt die Differenz zwischen a und b einen Beitrag zum Regelsignal, welches in der kompensierenden Weise ausgenutzt wird.

Die in Fig. 2 dargestellte Codierung, betrachtet man zunächst nur einmal die beiden Haupt-Servopositionssignale A und B, die im übrigen auch Burst-Signale genannt werden, ist eine Codierung nach dem sogenannten »Diburst-Muster«. Das Positionsfehlersignal ergibt sich dabei aus der Differenz der beiden Burst-Signale A—B. In normierter Form wird üblicherweise für das Positionsfehlersignal die Gleichung geschrieben:

$$PES = \frac{A-B}{A+B}.$$

Dies ist das übliche Positionsfehlersignal PES, welches zur Verstellung des Magnetkopfes auf die Spurmitte hin benutzt wird.

Durch die zusätzlichen Hilfs-Servopositionssignale a und b, zusätzliche Bursts also, welche schmaler als die halbe Spurbreite W sind, wird im Bereich $W_A > w'$ bzw. $W_B > w'$ die Abstandsänderung zwischen der Magnetplatte 2 und dem Magnetkopf 1 dadurch festgestellt, daß man ermittelt ob $A \neq B$ ist. Wenn man das exponentielle Abstandsgesetz, welchem das im Kopf induzierte Signal unterliegt, in kleinen Bereichen linearisiert, so gilt in den Bereichen, in denen $W_A$ und $W_B > w'$ ist, die nachfolgende Formel für das korrekte Positionsfehlersignal:

$$PES = \frac{(A-B)-v(a-b)}{A+B+a+b},$$

wobei v das Verhältnis der Breite von Haupt-Servopositionssignal zu Hilfs-Servopositionssignal angibt, d. h. $v = W/w'$.

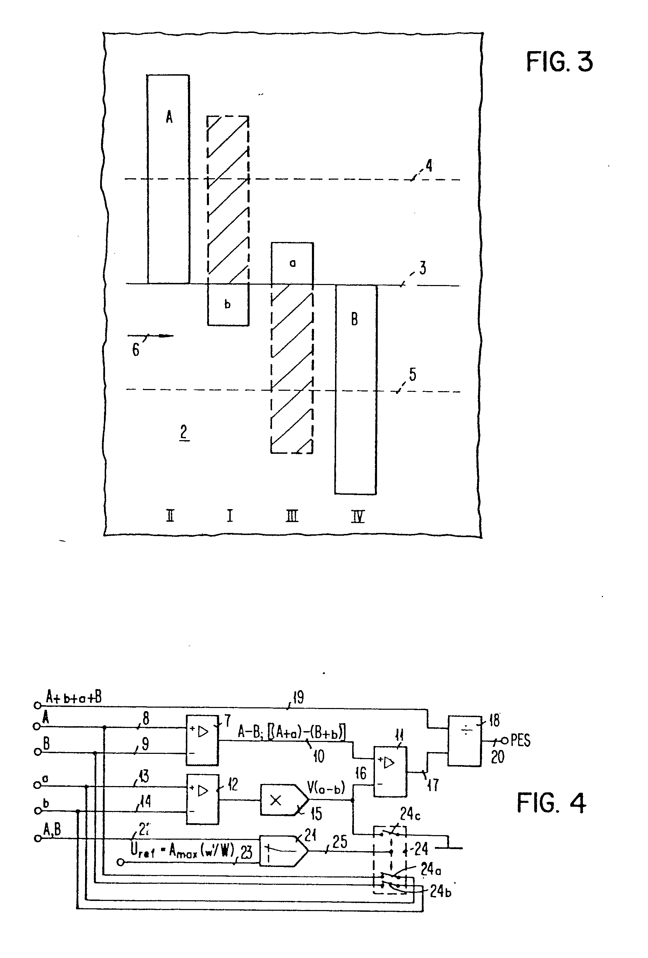

In Fig. 3 ist schematisch eine Möglichkeit dargestellt, wie das Codierungsmuster auf der Magnetplatte 2 initialisiert werden kann. Zunächst wird dabei in dem mit I bezeichneten ersten Schritt das Hilfs-Servopositionssignal b mit dem entsprechend zur Spurmitte 3 verschobenen Schreibkopf, beispielsweise dem Magnetkopf 1 auf Fig. 1 und 2, über dessen gesamte Breite W an der zeitlich und örtlich zutreffenden Stelle eingeschrieben. Dann wird in dem mit II bezeichneten zweiten Schritt das erste Haupt-Servopositionssignal A mit entsprechend verschobenem Schreibkopf über dessen volle Breite geschrieben, wobei gleichzeitig nicht nur an der Position für das Signal A, sondern auch an der Position für das Signal b geschrieben wird. Dadurch wird der nicht benötigte, schraffierte Teil des Hilfs-Servopositionssignals b überschrieben bzw. gelöscht, so daß nur auf der einen Seite der Spurmitte 3 der gewünschte Teil des Hilfs-Servopositionssignals b stehen bleibt. Im nächsten, dem dritten Schritt, der in Fig. 3 III bezeichnet ist, wird das zweite Hilfs-Servopositionssignal a eingeschrieben, indem der entsprechend zur Spurmitte verschobene Schreibkopf über seine gesamte Breite dieses Signal auf der Magnetplatte 2 einschreibt. Anschließend wird in dem mit IV bezeichneten vierten Schritt das zweite Haupt-Servopositionssignal B eingeschrieben, indem der Schreibkopf nunmehr völlig auf der rechten Seite der Spurmitte 3 angeordnet ist und über seine volle Breite sowohl das Haupt-Servopositionssignal B einschreibt als auch gleichzeitig den schraffierten Teil des im Schritt III eingeschriebenen Hilfs-Servopositionssignals a löscht bzw. überschreibt. Erhalten bleibt dann nach dem Schritt IV das gewünschte Hilfs-Servopositionssignal a auf der einen Seite der Spurmitte 3, d. h. auf der anderen Seite des Servopositionssignals B.

In Fig. 4 soll anhand eines schematischen Blockschaltbildes die Ermittlung des Positionsfehlersignals PES erläutert werden. Einem Differenzverstärker 7 wird auf einer Leitung 8 das eine Haupt-Servopositionssignal A an dem positiven Eingang zugeführt. Auf einer Leitung 9 wird dem negativen Eingang dieses Differenzverstärkers 7 das zweite Haupt-Servopositionssignal B zugeführt. Am Ausgang des Differenzverstärkers 7 steht damit die Differenz A—B auf Leitung 10 an, die dem positiven Eingang eines weiteren Differenzverstärkers 11 zugeführt wird.

Die zusätzlichen Hilfs-Servopositionssignale a und b werden zur Differenzbildung und Auswertung einem Differenzverstärker 12 zugeführt. Dabei wird auf einer Leitung 13 dem positiven Eingang des Differenzverstärkers 12 das Hilfs-Servopositionssignal a und dem negativen Eingang auf Leitung 14 das andere Hilfs-Servopositionssignal b zugeführt. Das Ausgangssignal des Differenzverstärkers 12 wird in einem Multiplizierer 15 mit dem Faktor v multipliziert, der weiter oben schon beschrieben ist, und den Quotienten aus der Breite W des Haupt-Servopositionssignals und der Breite w′ des Hilfs-Servopositionssignals darstellt. So steht am Ausgang der Multiplikationsschaltung 15 bzw. am Minuseingang des Differenzverstärkers 11 auf der Leitung 16 das Signal $v(a-b)$ an. Somit steht am Ausgang des Differenzverstärkers 11 auf der Leitung 17 das Signal $(A-b)-v(a-b)$ an Dieses Signal auf Leitung 17 wird einer Dividierschaltung 18 zugeführt. Diese Schaltung 18 weist einen zweiten Eingang mit der Leitung 19 auf, auf der die Summe sämtlicher Servopositionssignale, nämlich $A+b+a+B$ zugeführt wird. Die Divisionsschaltung 18 dividiert nun zur Erzeugung des am Ausgang auf Leitung 20 anstehenden Positionsfehlersignals PES das Signal auf Leitung 17 durch das Signal auf Leitung 19. Damit ist das Positionsfehlersignal in seiner Grundlage erzeugt und die Höhendifferenzen zwischen Magnetkopf und Oberfläche sind detektierbar und im Positionsfehlersignal so berücksichtigt, daß unnötige Versetzungen aufgrund von Verkippungen nicht mehr stattfinden.

Wenn der Magnetkopf sehr stark von der Spurmitte 3 in Fig. 1 und 2 abweicht, so daß er aus dem Bereich der beiden Hilfs-Servopositionssignale a oder b herausfährt, dann sind diese Signale immer noch im Ergebnis des Positionsfehlersignals PES enthalten, mindern dieses Signal aber, welches eigentlich bei der großen Spurabweichung voll für die Zurückführung des Magnetkopfes auf die Spurmitte verwendet werden sollte. Zur Berücksichtigung dieser Tatsache und um die Beiträge, die die Hilfs-Servopositionssignale a und b leisten können, zu berücksichtigen, ist in der in Fig. 4 dargestellten Ausführungsform des Blockschaltbildes eine Vergleichsschaltung 21 vorgesehen. Dieser Vergleichsschaltung 21 werden auf einer Eingangsleitung 22 die Signale A oder B zugeführt und auf eine Leitung 23 wird eine Referenzspannung zugeführt, die die Breitenrelation zwischen Hilfs- und Haupt-Servopositionssignal, nämlich w′/W und die maximale Amplitude des Signals A oder B wiedergibt. Sobald also vom Magnetkopf 1 kein Signal a oder b mehr detektiert wird, spricht die Vergleichsschaltung 21 an und steuert einen steuerbaren Schalter 24 derart, daß das Ausgangssignal der Multiplikationsschaltung 15 auf Leitung 16 über den Kontakt 24c auf Erdpotential gelegt und somit nicht mehr am negativen Eingang des Differenzverstärkers 11 wirksam wird.

Vom Ausgang 25 der Vergleichsschaltung 21 wird neben der Eliminierung des Signals auf Leitung 16 für den Differenzverstärker 11 gleichzeitig durch Schließung zweier Kontakte 24a und 24b das Hilfs-Positionssignal a auf Leitung 13 auf die Leitung 8 des Haupt-Servopositionssignals A am positiven Eingang des Differenzverstärkers 7 aufgeschaltet. Des weiteren wird über den Kontakt 24b des steuerbaren Schalters 24 das zweite Hilfs-Servopositionssignal b auf Leitung 14 aufgeschaltet auf die Leitung 9 und damit den negativen Eingang des Differenzverstärkers 7, um damit additiv das Haupt-Servopositionssignal B zu verstärken. Durch diese zusätzliche Aufschaltung der Hilfs-Servopositionssignale auf die Haupt-Servopositionssignale werden im Fall großer Spurabweichungen und kleiner Signalamplituden von A und B ein verbessertes Signal/Rauschverhältnis durch entscheidende Vergrößerung der Signalamplituden erreicht.

Durch die in der Fig. 4 im Blockschaltbild angegebene prinzipielle Schaltung und die in Fig. 2 dargestellte Codierung wird in vorteilhafter Weise ermöglicht, die Fehler im Positionsfehlersignal, die aus Abstandsänderungen des Kopfes zur Plattenoberfläche resultieren, zu erkennen und in weiten Bereichen zu korrigieren. Dies wird erzielt mit einem relativ geringen zusätzlichen Aufwand bei der Initialisierung des Codierungsmusters. Darüber hinaus ist es möglich, die zusätzlichen Hilfs-Servopositionssignale a und b zum einen zur Normierung, wie dies weiter oben beschrieben ist, zu verwenden sowie zur Verbesserung des Signal/Rauschverhältnisses beizutragen, wie dies ebenfalls durch Aufschaltung auf die Haupt-Servopositionssignale dargestellt ist. Weiterhin erscheint es möglich, diese zusätzlichen Signale zu Synchronisationszwecken zu verwenden, wenn dies notwendig erscheint. Es ist hier jedoch nicht näher darauf eingegangen.

Fig. 5 zeigt in einem schematischen Blockschaltbild einen Regler für die Spurnachlaufsteuerung, der für die Korrektur gleichförmiger Störgrößen vorgesehen ist. Dabei wird einem Regler 30 auf einer Eingangsleitung 31 das zu regelnde Eingangssignal zugeführt. Auf der Ausgangsleitung 32 steht das Reglersignal an, das ohne Berücksichtigung der Störgrößeneliminierung direkt auf eine Regelmechanik 33 über einen Summierpunkt 34 gegeben wird.

Der Regler 30 ist im Falle von Spurnachlaufregelungen im allgemeinen ein digitaler bzw. Abtastregler. Dieser bildet eine mit Koeffizienten gewichtete Summe aus dem gegenwärtigen Eingangswert zu einem bestimmten Zeitpunkt und vergangenen Eingangs- und Ausgangswerten. Je mehr Eingangs- und Ausgangswerte aus der Vergangenheit mit benutzt werden, um so höhergradig wird der Regler bezeichnet. Die mit 33 bezeichnete Regelmechanik umfaßt im wesentlichen den Leistungsverstärker für den Motor sowie die Zugriffsmechanik, die den Kopf bzw. ihren Tragarm bei Spurnachlaufsteuerungen verstellt.

Zur Korrektur der gleichförmigen Störgrößen werden die Ausgangssignale des Reglers 30 auf Leitung 35 einem Mittelwertbildner 36 zugeführt. Dieser Mittelwertbildner 36 sammelt sämtliche in einem bestimmten Zeitraum, beispielsweise eine Umdrehung einer Spur, auftretende Werte des Reglers und bildet aus ihnen entsprechend der Anzahl der Werte einen Mittelwert. Dieser Mittelwert wird mit Hilfe eines Steuersignals S1 auf Leitung 37 über die Ausgangsleitung 38 einem Addierer 39 zugeführt. Zum selben Zeitpunkt wird aufgrund des Signals S1 auf Leitung 37 durch den Addierer 39 über dessen Ausgangsleitung 40 einem Speicher 41 der zu speichernde Wert zugeführt. Die Taktgabe beim Speicher 41 zu diesem Zweck erfolgt ebenfalls über das Steuersignal S1 auf Leitung 37.

Der nunmehr im Speicher 41 gespeicherte Wert wird über die Ausgangsleitung 42 dem Summierpunkt 34 zugeführt und ergänzt somit das Regelsignal auf der Leitung 32 additiv, so daß ein größeres Signal über die Leitung 43 der Regelmechanik 33 zugeführt wird. Gleichzeitig wird das Ausgangssignal auf Leitung 42 einem Eingang 44 des Addierers 39 zugeführt, so daß der Speicherwert im Speicher 41 zusammen mit dem Wert auf Leitung 38 bei einem neuen Auftreten des Steuersignals S1 neu eingeschrieben wird. Die auf Leitung 42 anstehende zusätzliche Größe, die im Takt des Signals S2 dem Summierpunkt 34 zugeführt wird, treibt als zusätzliche Stellgröße den Magnetkopf zur Spurmitte hin. Sind in einer Spur mehrere Servosektoren und Datensektoren untergebracht, so entspricht der Takt des Signals S2 dem Auftreten der Servosektoren, so daß im Takte der Servosektoren der Ausgangswert des Speichers 41 auf Leitung 42 dem Summierpunkt 34 zugeführt wird. Dort vereint es sich mit dem ebenfalls in diesem Takt auftretenden Ausgangssignal auf Leitung 32 des Reglers 30.

Im Addierer 39 wird zu dem momentan gültigen Mittelwert, der auf Leitung 38 vom Mittelwertbildner 36 zugeführt wird, der Vergangenheitswert des Speichers 41 hinzuaddiert, der auf der Leitung 44 ansteht. Somit wird im Addierer 39 ein aktualisierter Wert über die Leitung 40 dem Speicher 41 zugeführt. Dieser Wert steht bis zu seiner Veränderung im Takte des Signals S2 jeweils auf der Ausgangsleitung 42 als zusätzliche Stellgröße zur Verfügung.

Nimmt man einmal den Fall an, daß sich die zu kompensierende »gleichförmige Kraft« weder in Richtung noch in der Größe ändert, dann wird zwischen zwei Mittelwertbildungen im Takte des Signals S1 der nächste Mittelwert bei dem nächsten Signal S1 Null sein. Auf der Leitung 38 steht also der Wert Null am Eingang des Addierers 39 an. Diesem wird der alte Wert im Speicher 41 über den Eingang 44 überlagert, so daß der Speicher 41 mit seinem alten Wert aktualisiert wird. Dieselbe Stellgröße bleibt also im Summierpunkt 34 erhalten und somit wird der Kopf weiterhin mit einer dem Ausgang des Reglers 30 überlagerten konstanten Größe zur Spurmitte hin verstellt.

Ändert sich jedoch zwischen zwei Mittelwertbildungen im Mittelwertbildner 36 zwischen zwei Zeitpunkten des Auftretens des Signals S1, d. h. also zwischen zwei Umdrehungen, der Mittelwert, dann ändert sich auch der mittels des Addierers 39 in den Speicher 41 eingeschriebene Wert nach Größe und Richtung, so daß dem Summierpunkt 34 eine andere Größe auf der Leitung 42 im Takte der des Signals S2, d. h. also beispielsweise der Servointervalle, zugeführt wird.

In vorteilhafter Weise wird mit dieser vorstehend beschriebenen Anordnung aus den Regelsignalen selbst festgestellt, wie groß gleichförmige Störgrößen sind und sie werden aus diesen selbst heraus so kompensiert, daß die Dynamik des eigentlichen Regelkreises nicht beeinträchtigt wird.

### Patentansprüche

1. Einrichtung zur Steuerung und Einhaltung der Spurlage von Magnetköpfen, die eine Relativbewegung zu einem magnetischen Aufzeichnungsträger aufweisen, wobei auf einem magnetischen Aufzeichnungsträger beidseitig der Mitte von Aufzeichnungsspuren jeweils versetzt und über die Spurbreite (W) hinausgehend Servopositionssignale aufgezeichnet sind und wobei durch die Steuerung der Wert der Servopositionsabtastsignale (A, B) detektiert wird und ein Positionsfehlersignal (PES) durch Prüfen der Differenz (A−B) der beiden Servopositionsabtastsignale (A, B) bestimmt wird, dadurch gekennzeichnet, daß

a)  Hilfs-Servopositionssignale in gleichem Abstandsbereich zur Spurmitte (3) und in Spurrichtung gegeneinander versetzt zusätzlich zu den Servopositionssignalen (A, B) aufgezeichnet sind,

b)  diese Hilfs-Servopositionssignalaufzeichnungen in Richtung senkrecht zur Spur eine Breite (w') aufweisen, die kleiner als die halbe Spurbreite (W) ist,

c)  Mittel zur Bildung der Differenz (a−b) aus den beiden Hilfs-Servopositionsabtastsignalen (a, b) und

d)  Mittel zum Bilden des Positionsfehlersignals (PES) unter Einbeziehung der Differenz aus den Hilfs-Servopositionsabtastsignalen (a, b) vorgesehen sind, derart, daß eine Verkippung des im Bereich der Hilfspositionssignalaufzeichnungen verbleibenden Magnetkopfs relativ zum Aufzeichnungsträger kompensiert wird.

2. Einrichtung nach Anspruch 1, dadurch gekennzeichnet, daß das Positionsfehlersignal (PES) aus den Servopositionsabtastsignalen (A, B) bzw. Hilfs-Servoabtastsignalen (a, b) gemäß der Gleichung zu

$$PES = \frac{(A-B) - \dfrac{W}{w'}\,(a-b)}{A+B+a+b}$$

bestimmt wird,

wobei W die Spurbreite bzw. Breite der Servopositionssignalaufzeichnungen und w' die Breite der Hilfs-Servopositionssignalaufzeichnungen ist und A, B, a, b die Werte der Servopositionsabtastsignale bzw. der Hilfs-Servopositionsabtastsignale sind.

3. Einrichtung nach Anspruch 1 oder 2, dadurch gekennzeichnet, daß bei Abweichung des Magnetkopfes (1) von der Spurmitte (3) um mehr als es der Breite (w') der Hilfs-Servopositionssignalaufzeichnungen entspricht, was durch eine Vergleichsschaltung (21) feststellbar ist, die Werte der Hilfs-Servopositionsabtastsignale (a, b) zur Vergrößerung des Positionsfehlersignals (PES) benutzt werden.

4. Einrichtung nach Anspruch 3, dadurch gekennzeichnet, daß durch die Vergleichsschaltung (21) mittels einer gesteuerten Schaltvorrichtung (24), bei der Differenzbildung zwischen dem Anteil der Servopositionsabtastsignale (A—B) und dem Anteil der Hilfs-Servopositionsabtastsignale ($\frac{W}{w'}$, [a—b]), der Anteil der Hilfs-Servopositionssignale eliminiert und die Signalanteile der Hilfs-Servopositionsabtastsignale (a, b) zu den entsprechenden Haupt-Servopositionsabtastsignalen (A, b) hinzuaddiert werden, bevor die Differenz der Haupt-Servopositionsabtastsignale (A, B) gebildet wird, so daß die Bildung des Positionsfehlersignals gemäß der Gleichung

$$PES = \frac{(A+a) - (B+b)}{A+B+a+b}$$

erfolgt.

5. Einrichtung nach einem der vorigen Ansprüche, dadurch gekennzeichnet, daß zur Initialisierung das Einschreiben der Haupt- und Hilfs-Servopositionssignale in folgender Weise vorgenommen wird:

I   Einschreiben des ersten Hilfs-Servopositionssignals (b) mit entsprechend zur Spurmitte (3) verschobenem Schreibkopf (1) über die volle Breite (W) des Schreibkopfs

II  Einschreiben des ersten Haupt-Servopositionssignals (A) mit entsprechend zur einen Seite der Spurmitte (3) eingestelltem Schreibkopf (1) über dessen volle Breite (W) und gleichzeitiges Überschreiben bzw. Löschen des gegenphasigen Signals gemäß Schritt I, so daß das gewünschte Hilfs-Servopositionssignal (b) in der geringeren Breite (w') erhalten bleibt,

III Einschreiben des zweiten Hilfs-Servopositionssignals (a) mit entsprechend zur anderen Seite der Spurmitte (3) verschobenem Schreibkopf (1) über dessen volle Breite (W),

IV  Einschreiben des zweiten Haupt-Servopositionssignals (B) mit entsprechend zur anderen Seite der Spurmitte (3) eingestelltem Schreibkopf (1) über dessen volle Breite (W) und gleichzeitiges Überschreiben bzw. Löschen des gegenphasigen Signals gemäß Schritt III, so daß das gewünschte Hilfs-Servopositionssignal (a) in der geringeren Breite (w') erhalten bleibt.

6. Verfahren zur Kompensation gleichförmiger Störgrößen in einem Regelkreis, zur Verwendung in einer Einrichtung nach einem der Ansprüche 1—5, dadurch gekennzeichnet, daß Augenblickswerte des Regelsignals (PES) am Ausgang des Reglers gemessen und daraus ein Mittelwert gebildet wird, der Mittelwert nach einer gewissen bestimmbaren Zeitspanne zu einem früheren Mittelwert addiert und gespeichert wird und der gespeicherte Wert zusätzlich zum Regelsignal (PES) in die Regelstrecke eingespeist wird.

7. Anordnung zur Durchführung des Verfahrens nach Anspruch 6, dadurch gekennzeichnet, daß ein Mittelwertbildner (36) vorgesehen ist, der aus dem Ausgangssignal (PES) des Reglers (30) den Mittelwert bildet, und daß ein Addierer (39) und ein Speicher (41) vorgesehen sind, wobei unter Mitwirkung eines Steuersignals (S1) in bestimmten Zeitabständen über den Addierer (39) der Mittelwert zum vorherigen Wert addiert und in den Speicher (41) eingestellt wird, dessen Ausgang dem Reglersignal (PES) im Takte eines zweiten Steuersignals (S2) hinzugefügt wird.

**Claims**

1. Device for controlling and maintaining the track position of magnetic heads executing a movement relative to a magnetic record carrier, servo position signals being recorded on a magnetic record carrier in offset fashion on both sides of the middle of recording tracks, and exceeding the track width (W) and the value of the servo-position signals (A, B) being detected by the control, and a position error signal (PES) being determined by checking the difference (A—B) of the two servo positions scanning signals (A, B), characterized in that

a)  auxiliary servo position signals are recorded in the same distance range to the middle of the track (3), and in offset fashion relative to each other in track direction, additionally to the servo position signals (A, B),

b)  these auxiliary servo position signal recordings are of a width (w') vertically to the track which is smaller than half the track width (W),

c)  means for forming the difference (a—b) of the two auxiliary servo position signals (a, b), and

d)  means for forming the position error signal (PES) including the difference from the auxiliary servo position signals (a, b) are provided, in such a manner that a tilting of the magnetic head remaining within the range of the auxiliary position signal recordings, relative to the record carrier is compensated.

2. Device as claimed in claim 1, characterized in that the position error signal (PES) is determined from the servo position scanning signals (A, B) or auxiliary servo scanning signals (a, b), respectively, in accordance with the equation to

$$PES = \frac{(A-B) - \dfrac{W}{w'}(a-b)}{A+B+a+b}$$

W being the track width or width of the servo position signal recordings, respectively, and w' the width of the auxiliary servo-position signal recordings, and A, B, a, b the values of the servo position scanning signals, or of the auxiliary servo-position scanning signals, respectively.

3. Device as claimed in claim 1 or 2, characterized in that if the magnetic head (1) deviates from the middle of the track (3) by more than the amount corresponding to the width (w') of the auxiliary servo position signal recordings, which can be determined by a comparator circuit (21), the values of the auxiliary servo position scanning signals (a, b) are used to increase the position error signal (PES).

4. Device as claimed in claim 3, characterized in that through the comparator circuit (21), by means of a controlled switching device (24) the contribution of the auxiliary servo position signals is eliminated in the forming of the difference between the contribution of the servo position scanning signals (A—B) and that of the auxiliary servo position scanning signals ($\frac{W}{w'}$ [a—b]), and the signal contributions of the auxiliary servo position scanning signals (a, b) are added to the respective main servo position scanning signals (A, B) prior to the forming of the difference of the main servo position scanning signals (A, B) so that the position error signal is generated in accordance with the equation

$$PES = \frac{(A+a)-(B+b)}{A+B+a+b}$$

5. Device as claimed in any one of the preceding claims, characterized in that for initializing the encoding of the main and auxiliary servo position signals the following steps are executed:

I  encoding the first auxiliary servo position signal (b) with a write head (1) shifted accordingly relative to the middle of the track (3) over the full width (W) of the write head,

II  encoding the first main servo position signal (A) with a write head (1) adjusted accordingly to one side of the middle of the track (3) over its full width (W), and simultaneously overwriting or erasing, respectively, the anti-phase signal in accordance with step I so that the desired auxiliary servo position signal (b) is maintained in its smaller width (w'),

III  encoding of the second auxiliary servo position signal (a) with a write head (1) shifted accordingly to the other side of the middle of the track (3) over its full head width (W),

IV  encoding of the second main servo position signal (B) with a write head (1) adjusted accordingly to the other side of the middle of the track (3) over its full head width (W), and simultaneously overwriting or erasing, respectively, the anti-phase signal in accordance with step III so that the desired auxiliary servo position signal (a) is maintained in its smaller width (w').

6. Method of compensating uniform disturbance variables in a control circuit to be used in a device in accordance with any one of claims 1 to 5, characterized in that
momentary values of the control signal (PES) are measured at the output of the control unit, and a mean value is formed thereof,
that after a predetermined period the mean value is added to an earlier mean value, and stored, and that the stored value is entered in the control path in addition to the control signal (PES).

7. Arrangement for carrying out the method as claimed in claim 6, characterized in that a mean value generator (36) is provided which forms the mean value of the output signal (PES) of the control unit (30), and an adder (39) and a storage (41) are provided, the mean value being added to the preceding value in predetermined intervals and with the use of a control signal (S1), and entered in the storage (41) whose output is added to the control signal (PES) in accordance with the clock of a second control signal (S2).

**Revendications**

1. Dispositif de commande et d'alignement des têtes magnétiques sur les pistes de, se déplaçant par rapport à un support d'enregistrement magnétique, oè des signaux de commande de positionnement sont imprimés avec un certain décalage de chaque côté du milieu desdites pistes d'enregistrement du support magnétique et dont la largeur d'enregistrement dépasse la largeur de ladite piste (W), où la valeur des signaux de commande de positionnement (A, B) est détectée par contrôle et un signal d'erreur de positionnement (PES) est défini par la différence (A—B) entre les deux signaux de commande de positionnement (A, B), caractérisé en ce que:

a)   des signaux de commande de positionnement auxiliaires sont, outre lesdits premiers signaux de commande ou de positionnement (A, B), enregistrés sur ladite piste magnétique à une même distance par rapport à sa partie médiane (3) mais décalés les uns par rapport aux autres dans le sens de la piste d'enregistrement,

b)   la largeur (w') des enregistrements desdits signaux de commande de positionnement auxiliaires lesquels sont perpendiculaires à la piste, est inférieure à la moitié de la largeur de ladite piste (V),

c)   des moyens permettent d'établir la différence (a—b) entre les deux signaux de commande de positionnement auxiliaires (a, b) et,

d)   des moyens sont prévus pour définir le signal d'erreur de positionnement (PES) compte tenu de la différence établie à partir des signaux de commande de positionnement auxiliaires (a, b), de sorte à compenser un écart important de ladite tête magnétique positionée sur les enregistrements des signaux auxiliaires par rapport au support d'enregistrement magnétique.

2. Dispositif selon la revendication 1, caractérisé en ce que le signal d'erreur de positionnement (PES) est déterminé à partir des signaux de commande de positionnement (A, B) et des signaux de commande de positionnement auxiliaires (a, b), selon l'équation

$$PES = \frac{(A-B) - \dfrac{W}{w'}(a-b)}{A+B+a+b}$$

où W représente la largeur de la piste voire la largeur des enregistrements des signaux de commande de positionnement, w' la largeur des enregistrements des signaux de commande de positionnement auxiliaires, et A, B, a, b les valeurs des signaux de commande de positionnement voire les signaux de commande de positionnement auxiliaires.

3. Dispositif selon la revendication 1 ou 2, caractérisé en ce que, lors d'un écart par rapport à la partie médiane (3) de la piste d'enregistrement, ladite tête magnétique (1) va plus loin que la largeur (w') des enregistrements de signaux de commande de positionnement auxiliaires, ce que l'on peut observer à l'aide d'un circuit comparateur (21), les valeurs desdits signaux de commande de positionnement auxiliaires (a, b) peuvent être utilisés pour amplifier le signal d'erreur de positionnement (PES).

4. Dispositif selon la revendication 3, caractérisé en ce que, le circuit comparateur (21) va permettre au moyen d'un circuit de commutation (24) asservi, de supprimer, quand on calcule la différence entre d'une part le produit des signaux de commande de positionnement (A—B) et d'autre part le produit des signaux de commande de positionnement auxiliaires ($\frac{W}{w'}$ [a—b]), le produit des signaux de commande de positionnement auxiliaires et de faire la somme, d'une part, des valeurs des signaux de commande de positionnement auxiliaires (a, b) et d'autre part des valeurs des signaux de commande de positionnement principaux (A, B), ceci avant de faire la différence entre les signaux de commande de positionnement principaux (A, B), de sorte à pouvoir établir le signal d'erreur de positionnement selon l'équation

$$PES = \frac{(A+a) - (B+b)}{A+B+a+b}$$

5. Dispositif selon l'une des revendications précédentes, caractérisé en ce que, pour initialiser l'opération d'écriture des signaux de commande de positionnement principaux et auxiliaires, il faut procéder de la façon suivante:

I   enregistrer un premier signal de commande de positionnement auxiliaire (b) sur toute la largeur (W) accessible à la tête d'écriture, celle-ci étant décalée conformément à la partie médiane (3) de la piste d'enregistrement,

II   enregistrer le premier signal de commande de positionnement principal (A) sur toute la largeur (W), accessible par la tête d'écriture, celle-ci étant, déplacée conformément sur un côté de la partie médiane (3) de la piste d'enregistrement, et simultanément superposer le signal de phase opposé selon l'étape I, de sorte à pouvoir conserver ledit signal de commande de positionnement (b) souhaité dans la largeur la moins importante (w'),

III   écrire le second signal de commande de positionnement auxiliaire (a) sur toute la largeur (W) accessible par ladite tête d'enregistrement, laquelle étant déplacée conformément sur l'autre côté de la partie médiane (3) de la piste d'enregistrement,

IV   écrire le second signal de commande de positionnement principal (B) sur toute la largeur (W) accessible par la tête d'enregistrement, celle-ci étant conformément déplacée sur l'autre côté de la partie médiane (3), et simultanément superposer le signal de phase opposé selon l'étape III de sorte à conserver le signal de commande de positionnement auxiliaire (a) souhaité dans la largeur (w') la moins importante.

6. Méthode permettant de compenser des erreurs de grandeurs comparables dans un circuit de régulation en utilisant un dispositif selon une des revendications 1 à 5, caractérisée en ce que des valeurs instantanées du signal de régulation (PES) sont mesurées à la sortie dudit circuit de régulation, la base desquelles valeurs instantanées sert à établir une valeur moyenne qui, après un laps de temps à déterminer, est ajoutée à une autre valeur moyenne établie antérieurement et stockée, laquelle valeur stockée est introduite dans le processus de régulation en plus du signal de régulation (PES).

7. Dispositif permettant la mise en oeuvre du procédé selon la revendication 6, caractérisé en ce qu'il est prévu un circuit de calcul de valeur moyenne (36), lequel détermine ladite valeur moyenne à partir du signal de sortie (PES) dudit circuit de régulation (30), et en ce qu'il est prévu un circuit additionneur (39) et un circuit de mémoire (41), où un premier signal de contrôle (S1), commande à des intervalles de temps prédéterminés que soit effectué par le circuit additionneur (39) la somme de ladite valeur moyenne et de la valeur obtenue antérieurement, puis la mémorisation dans le circuit (41) du résultat qui sera ajouté audit signal de régulation (PES) lors de l'émission d'un second signal de commande (S2).

FIG. 1

$H_A$

$H_B$

4

5

2

SERVO. POS. A

SERVO. POS. B

3

FIG. 2

W

A

4

$W_A$

W

1

a

3

6

b

w'

$W_B$

B

5

2

S1

37

S2

36

38

39

40

41

44

42

35

30

32

34

31

43

FIG. 5

33

11

FIG. 3

FIG. 4